# FASCICULE DE BREVET EUROPEEN

(11) **EP 1 250 397 B1**
(45) Date de publication et mention de la délivrance du brevet: **22.09.2004**
(21) Numéro de dépôt: 00974571.2
(22) Date de dépôt: 26.10.2000
(51) Int. Cl.: C09K 17/06, C09K 17/12

(54) **PROCEDE DE STABILISATION D'UN SOL PAR ADJONCTION D'UN LIANT**
BODENSTABILISIERUNG DURCH BINDEMITTELZUSATZ
METHOD FOR STABILISING GROUND SURFACE BY ADDITION OF A BINDER

(30) Priorité: 26.10.1999 FR 9913353
(43) Date de publication de la demande: 23.10.2002
(73) Titulaire: BUREAU DE RECHERCHES GEOLOGIQUES ET MINIERES, ETABLISSEMENT PUBLIC A CARACTERE INDUSTRIEL ET COMMERCIAL, 75739 Paris Cédex 15 (FR); Espace Sports Technologies, 31770 Colomiers (FR)
(72) Inventeur: GABORIAU, Hervé, F-45100 Orléans (FR); SALMON, Roland, F-31500 Toulouse (FR); CLOZEL LELOUP, Blandine, F-45000 Orléans (FR)
(74) Mandataire: Puiroux, Guy
(86) Numéro de dépôt international: PCT/FR2000/002988
(87) Numéro de publication internationale: WO 2001/030937

(56) Documents cités:
- WO-A-94/06884
- US-A- 4 652 310
- PATENT ABSTRACTS OF JAPAN vol. 017, no. 108 (C-1032), 5 mars 1993 (1993-03-05) & JP 04 293995 A (RAITO KOGYO CO LTD), 19 octobre 1992 (1992-10-19)

## Description

La présente invention concerne un procédé de stabilisation renforcée des sols, notamment en vue d'améliorer leur résistance à l'érosion ou à la circulation, tout en leur conservant en surface leur aspect naturel c'est-à-dire la couleur et la texture du matériau d'origine. Elle concerne également un revêtement de sol renforcé apte à la circulation de piétons ou de véhicules.

Le double objectif visé par le procédé, à savoir la stabilisation et la conservation de l'aspect naturel ont conduit à développer un liant spécifique qui exploite les propriétés propres au verre visé par la présente invention. Ces propriétés sont d'une part une forte réactivité chimique qui est à l'origine de la résistance mécanique, et d'autre part une transparence qui permet de conserver la couleur du matériau traité.

On connaît différents procédés de stabilisation des sols permettant d'améliorer d'une part leurs caractéristiques mécaniques de façon à les rendre aptes à supporter une circulation de piétons ou de véhicules et d'autre part leur résistance aux différents agents atmosphériques, tels que notamment le gel/dégel, et l'alternance de périodes pluvieuses et de périodes de sécheresse.

On a ainsi proposé, dans l'état antérieur de la technique, d'adjoindre aux sols des chaux vives ou grasses, ainsi que des ciments, en particulier des liants de faible résistance nominale à base de laitiers ou de cendres volantes. On a ainsi utilisé de tels procédés de stabilisation en génie civil dans des applications diverses. On a notamment proposé d'assurer ainsi la stabilisation des couches de fondation et de base des routes, autoroutes et aérodromes. Dans ces applications, les couches traitées ne sont pas directement exposées à la circulation car elles sont surmontées par une couche de roulement qui supporte les efforts dus au trafic.

On a également proposé dans la demande WO-A-94.06884 une méthode destinée à assurer la stabilisation de sols argileux par une addition de chaux et de silice. Cette méthode consiste à favoriser la formation des CSH (calcium silicates hydrates) plus résistants, au détriment des CAH (calcium aluminates hydrates). Dans un tel procédé on utilise la silice contenue dans la structure même de l'argile du sol traité qui est complétée par un faible apport de silice extérieur. Un tel procédé ne peut en conséquence être mis en oeuvre que pour assurer la stabilisation de sols de nature argileuse. La présente invention, au contraire est destinée à assurer une stabilisation des sols de nature quelconque.

Dans le cas de traitement en surface (chemins forestiers et ruraux, pistes cyclables), on a pour habitude, après la mise en oeuvre, de revêtir le sol traité d'une protection qui a pour but d'éviter une dessiccation pouvant provoquer des fissures et la formation de poussière en surface. Par ailleurs on sait également qu'une telle perte d'eau peut être préjudiciable à l'évolution des résistances mécaniques puisque l'hydratation du liant ne peut plus s'effectuer dans de bonnes conditions. Lorsque l'on veut conserver l'aspect naturel et la couleur d'origine d'un sol, ce qui est notamment le cas des pistes ou des chemins pour piétons, on le protège, les premiers jours, en disposant en surface des feuilles de matière plastique, telles que par exemple en polyane, ou des sacs humides. On peut également pulvériser sur la surface du sol traité des produits de cure incolores, identiques à ceux utilisés dans le cas du béton frais. On comprend que la mise en oeuvre de ces moyens de protection constitue une opération supplémentaire qui induit nécessairement un surcoût.

Quoiqu'il en soit, que le matériau stabilisé ait été ou non protégé par un revêtement de surface, des fissures peuvent apparaître après sa mise en place, sous l'effet notamment du phénomène de retrait lors de la prise et du durcissement du ciment ou d'un tassement différentiel dû au passage d'engins lourds, etc. Les sols traités selon les procédés de stabilisation de l'état antérieur de la technique se rigidifient à la manière d'un béton maigre, de telle sorte que les désordres produits deviennent alors irréversibles, ainsi qu'il en est généralement lorsque l'on réalise une surface cimentée. De plus le sol traité est particulièrement dur ce qui rend difficile son utilisation pour réaliser des aires de jeux, des pistes cyclables ou des chemins.

La présente invention a pour but d'éviter ces inconvénients en proposant un procédé de stabilisation renforcée permettant d'obtenir des surfaces traitées qui respectent l'aspect naturel des sols (notamment sa couleur et sa texture granulaire) et qui possèdent des capacités d'«autocautérisation» leur permettant, dans le cas où des microfissures apparaîtraient sous l'effet de sollicitations particulièrement agressives (passage d'engins lourds, gel/dégel), d'absorber de façon naturelle ces dernières. La présente invention a également pour but de proposer un procédé de traitement qui ne nécessite pas de revêtement de protection, ce qui se traduit par une mise en oeuvre plus facile et un moindre coût de traitement.
La présente invention a ainsi pour objet un procédé de stabilisation d'un sol, dans lequel on mélange avec celui-ci un liant apte à faire prise en présence d'eau, caractérisé en ce que :
- on utilise un liant comprenant du verre silicaté industriel, c'est-à-dire un verre dont la somme des teneurs en Na₂O et en K₂O est supérieure à 10%, et qui est exempt de clinker et de laitier et qui se trouve à l'état finement broyé,
- on complète ce liant en ajoutant au verre au moins un réactif basique apte à porter l'eau du mélange, après gâchage de celui-ci, à un pH au moins égal à 12, le rapport massique verre/réactif basique étant supérieur à 3.

On pourra notamment utiliser un verre creux sodocalcique qui possède une teneur en Na₂O supérieure à 10%.

Dans un mode de mise en oeuvre de l'invention la proportion de verre dans le liant est au moins égale à 60%.

On a constaté que l'efficacité du liant qui a été mis en oeuvre pour la stabilisation des sols provient de la forte réactivité du verre utilisé. En effet les verres silicatés industriels, utilisés dans le présent procédé, qu'ils soient des verres creux (provenant de bouteilles, de gobelets, etc.) ou des verres plats, se différencient des verres silicatés naturels (tels que la pouzzolane, le tuf, la ponce) ou des autres verres silicatés industriels (tels que notamment les laitiers de hauts fourneaux, la fumée de silice, les cendres volantes de centrales thermiques) par une teneur élevée en matériau alcalin et sont tels que la somme des teneurs en Na₂O et K₂O est supérieure à 10%. On rappellera en effet que la teneur élevée en sodium, (teneur en Na₂O voisine de 15%) des verres creux utilisés est imposée par la nécessité d'abaisser leur température de fusion lors de la fabrication de ce type de verre.

Ces teneurs en cations alcalins ont d'importantes conséquences sur la réactivité chimique du verre en présence d'eau. En effet, ces cations alcalins au sein du réseau silicaté rendent le verre beaucoup plus sensible à la dissolution, notamment pour des pH basiques. Cette forte réactivité permet une dissolution plus importante et plus rapide de la silice qui peut alors se recombiner et reprécipiter pour former une structure mécaniquement résistante.

A titre d'exemple on a reproduit dans le tableau I ci-après un exemple de composition chimique de divers types de verres creux.

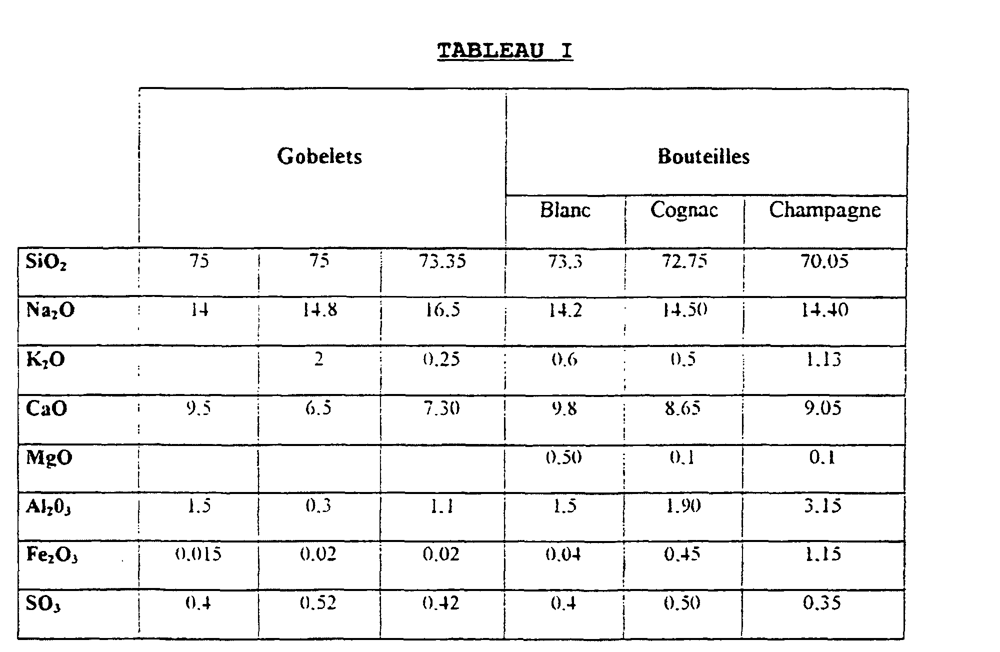

On a également représenté sur le tableau II ces mêmes pourcentages dans le cas de verres plats industriels.

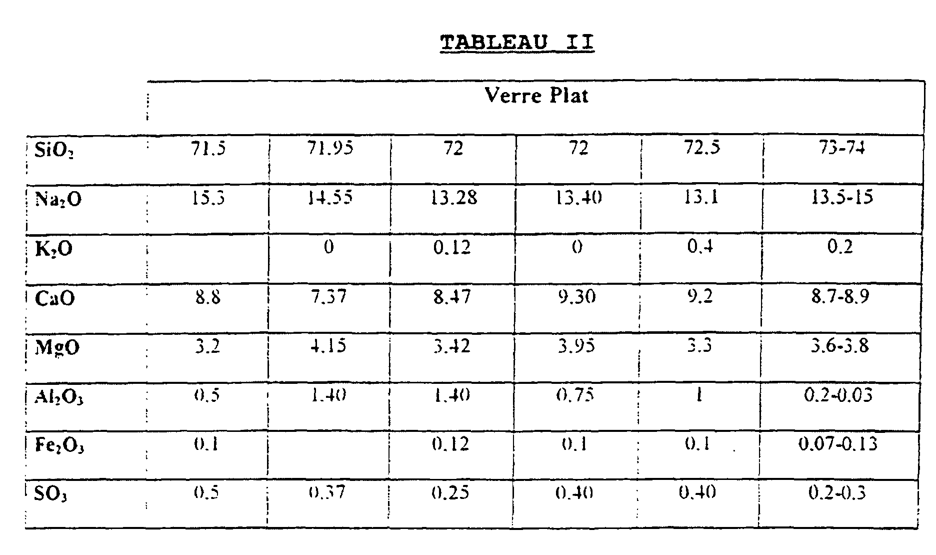

Le réactif basique peut être constitué d'au moins une base forte, telle que notamment de la soude ou de la potasse. On utilisera ainsi notamment une quantité de soude de l'ordre de 0,5% à 5% en poids total de liant. Il peut également comprendre de la chaux vive ou de la chaux éteinte (Portlandite), qui représentera notamment 5% à 25% en poids total de liant.

On peut bien entendu suivant l'invention utiliser en tant que réactif basique de la chaux seule. Dans ce mode de mise en oeuvre on utilisera préférentiellement de la chaux vive. En effet, il a été démontré, par des essais de laboratoire, (mesure de l'enfoncement d'une sonde de Vicat) que le début de prise des liants comportant de la chaux vive intervenait en moins de 12 heures alors qu'il pouvait atteindre plus de 2 semaines lorsque la chaux était de la chaux éteinte.

Le verre utilisé peut être tel qu'au moins 90% des particules de celui-ci ont leur plus grande dimension inférieure à 100 µm.

Dans un mode de mise en oeuvre de l'invention la quantité de liant mélangée au sol à traiter sera comprise en moyenne entre environ 3% et 15% en poids de celui-ci, suivant le type d'application considéré.

L'un des avantages de la présente invention est notamment de valoriser des stocks de verre qui sont impropres au recyclage en tant que matière première dans l'industrie verrière, tels que notamment ceux qui sont refusés au cours des contrôles de tri optique, et que l'on désigne comme étant des « Refus de tri optique ». En effet, on sait qu'après leur collecte, les déchets d'emballage en verre doivent être épurés pour éliminer les impuretés qui perturberaient le bon fonctionnement des fours verriers. C'est le cas des produits de terre cuite et des céramiques qui sont éliminés par tri optique. Cette étape de traitement aboutit à un déchet riche en verre qui s'appelle « refus de tri optique ». La présente invention permet ainsi d'utiliser des produits qui, jusqu'à présent, constituaient des déchets difficiles à éliminer.

On remarquera par ailleurs que le produit est « cautérisable », que sa prise est suffisamment rapide pour permettre une circulation dans des délais extrêmement courts, mais que son durcissement lent contribue à l'obtention d'un produit de qualité.

La présente invention a également pour objet un revêtement de sol renforcé par l'ajout d'un liant en mesure de faire prise par adjonction d'eau, caractérisé en ce que le liant est constitué de verre silicaté industriel, c'est-à-dire un verre dont la somme des teneurs en Na₂O et en K₂O est supérieure à 10%, et qui est exempt de clinker et de laitier et qui se trouve à l'état finement broyé, auquel on ajoute au moins un réactif basique apte à porter l'eau du mélange, après gâchage de celui-ci, à un pH au moins égal à 12, le rapport massique verre/réactif basique étant supérieur à 3.

On décrira ci-après, à titre d'exemples non limitatifs, diverses formes d'exécution de la présente invention, en référence au dessin annexé sur lequel :
Les figures 1 et 2 sont des courbes représentant la variation de l'Indice Portant (CBR) en fonction du temps, ou âge du matériau, de trois sols qui ont été stabilisés suivant le procédé de l'invention, respectivement pour deux liants de verre de compositions différentes.
La figure 3 est une courbe représentant la variation en fonction du temps de la résistance à la compression de trois formulations de liants à base de verre et d'un liant Portland normalisé
Les figures 4 et 5 sont des courbes représentant la variation de l'Indice Portant (CBR) en fonction du temps dans le cas respectivement d'un sol silico-calcaire et d'un sol calcaire qui ont été traités par le procédé suivant l'invention respectivement avec deux liants de type différent.

Suivant l'invention on a réalisé des essais de stabilisation de sols sur trois types de sables différents, à savoir un sable alluvionnaire, un sable calcaire tendre concassé, et un sable silico-calcaire concassé. Ces différents essais de stabilisation ont de plus été réalisés avec deux formulations de liant. Les sables, avant traitement, ont été caractérisés par des essais normalisés à savoir des essais dits « Proctor » qui permettent de déterminer l'aptitude d'un sol à se compacter et qui sont utilisés, notamment, pour déterminer la teneur en eau optimale (WOPN) conduisant à une densité maximale après compactage, et des essais de type dit « CBR » qui mesurent l'aptitude d'un sol à résister au poinçonnement et donc à supporter une circulation. Cette résistance au poinçonnement a été évaluée par l'Indice Portant (CBR) qui est un nombre sans dimension et qui augmente lorsque la résistance au poinçonnement augmente. Cet Indice Portant (CBR) était pour les matériaux non traités de 5,1 pour le sable alluvionnaire (courbe c), de 24,5 pour le sable calcaire tendre (courbe b) et de 47 pour le sable silico-calcaire (courbe a).

Le verre utilisé était de type dit « refus de tri optique » et provenait d'une installation industrielle de recyclage de verre creux, c'est-à-dire comme mentionné précédemment de rejets qui ne sont pas valorisables par les verriers car ils contiennent des éléments réfractaires à la fusion.

Ce verre a été broyé en voie sèche dans un broyeur à boulets jusqu'à atteindre la finesse désirée , à savoir un diamètre moyen de 10 µm. Sur la base de ce verre on a ainsi constitué deux liants à savoir un liant référencé A, constitué de 85% de verre et de 15% de chaux vive et un liant référencé B constitué quant à lui de 87% de verre, 10% de chaux vive et 3% de soude. La proportion relative de chaux et de soude dans le liant a été optimisée par des essais préliminaires sur pâte de ciment. On a ainsi constaté que cette proportion permettait d'améliorer les performances mécaniques par rapport à la formulation ne comportant que de la chaux vive sans augmenter pour autant la durée de la prise, phénomène observé si la soude est utilisée seule. On a d'ailleurs constaté, que lorsque le réactif basique est constitué de chaux et de soude, le rapport optimal Poids de chaux / Poids de soude était favorablement compris entre 3 et 20.

On a respectivement mélangé 7% de chacun des liants A et B avec du sable alluvionnaire, du sable de calcaire tendre et du sable silico-calcaire. Ces mélanges ont ensuite été homogénéisés puis humidifiés à la teneur en eau optimale déterminée suivant l'état antérieur de la technique par des essais Proctor, puis, après malaxage, les matériaux traités respectifs ont été moulés selon les modalités Proctor, de façon à obtenir des éprouvettes normalisées. La totalité de ces éprouvettes a été conservée en chambre humide pendant une durée minimale de 7 jours, et au-delà de cette durée une partie de celles-ci est restée en chambre humide et les autres ont été conservées en atmosphère sèche, à savoir l'atmosphère ambiante du laboratoire d'essais. Après des durées de conservation différentes les performances du traitement ont été évaluées par l'Indice Portant (CBR). Les mesures ont été portées dans le tableau III ci-après :

**TABLEAU III**

| Age (jours) | Conservation H : humide A : ambiante | Indice Portant (CBR) | | | | | |
|---|---|---|---|---|---|---|---|
| | | Sable alluvionnaire | | Sable de calcaire tendre | | Sable silico-calcaire | |
| | | Liant A | Liant B | Liant A | Liant B | Liant A | Liant B |
| 1 | H | 10.3 | 20.4 | 64.5 | 77 | 118 | 117 |
| 7 | H | 14.4 | 87 | 132 | 241 | 211 | 292 |
| 28 | H | 48 | 156 | 366 | 466 | 465 | 518 |
| 28 | A | 144 | 152 | 437 | 515 | 396 | 524 |
| 90 | H | 138 | 188 | 563 | 655 | 648 | 620 |
| 90 | A | 128 | 168 | 585 | 644 | 494 | 665 |

On constate tout d'abord sur ce tableau que, pour les trois matériaux traités et pour les deux formulations de liant utilisé (liant A et liant B), le procédé de stabilisation suivant l'invention a conduit à une amélioration significative de la résistance au poinçonnement.

Ce tableau montre également que les meilleurs résultats ont été obtenus avec le sable silico-calcaire qui, dès le premier jour, a possédé une résistance au poinçonnement suffisante pour autoriser une marche normale en surface du matériau traité. On constate également que la formulation comprenant le liant B, dont on rappellera que les proportions pondérales avant apport d'eau étaient les suivantes : verre 87%, chaux 10%, soude 3%, a conduit à une augmentation de la résistance au poinçonnement plus rapide au cours des premiers jours que la formulation avec le liant A, dont on rappellera que les proportions pondérales des constituants avant apport d'eau étaient : verre 85%, chaux 15%.

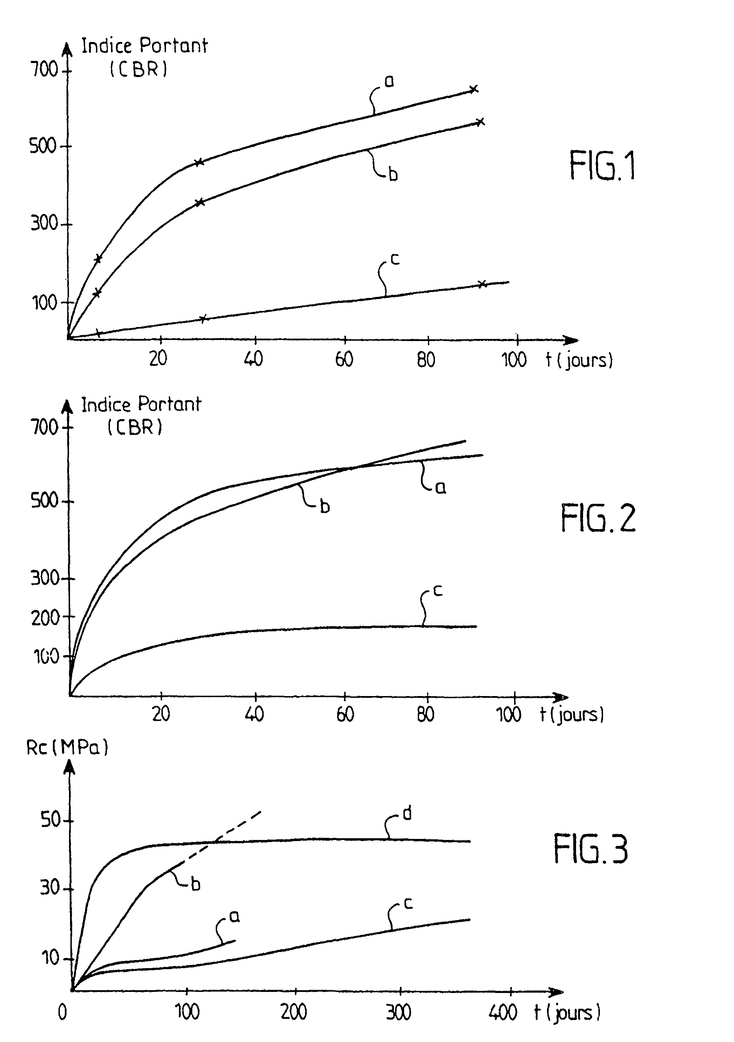

On a respectivement représenté sur les figures 1 et 2 les valeurs portées dans le tableau III à savoir la variation en fonction du temps de l'Indice Portant (CBR) des revêtements formés de sables alluvionnaires, (à savoir des sables de Loire courbe c), des sables calcaires (courbe b) et des sables silico-calcaires (courbe a), respectivement pour le liant A (figure 1) et le liant B (figure 2).

Ces deux figures montrent qu'à l'évidence, la réactivité du sol traité par le procédé de stabilisation suivant l'invention n'est pas terminée à 100 jours de sa date de traitement, et qu'elle possède des qualités lui permettant d'évoluer dans le temps.

Cette continuité de réactivité au-delà de 100 jours est confirmée par des essais qui ont été effectués sur le liant lui-même.

Ainsi, sur la figure 3, on a représenté la courbe de variation de la résistance à la compression Rc de trois liants du type à base de verre « refus de tri optique » en fonction du temps. On retrouve ainsi sur cette figure les deux liants de formulation A (courbe a) et de formulation B (courbe b) auxquels on a adjoint un liant de formulation C (courbe c), à savoir constitué de 90% de verre et de 10% de chaux vive, ainsi qu'un quatrième liant constitué par un ciment Portland normalisé comportant un ajout de pouzzolane, à savoir un ciment CPA-CEM I 32,5 Z (courbe d).

La figure 3 montre que le ciment de type classique (courbe d) voit sa réactivité terminée aux environs de 30 jours, dans la mesure où sa résistance à la compression n'évolue plus. Par contre, en ce qui concerne les trois liants de formulation A, B et C, on constate que, bien que les valeurs de leur résistance à la compression soient différentes, ces valeurs ne tendent pas vers une valeur asymptotique même lorsque l'on atteint les 100 jours. On a constaté ainsi que le revêtement à base de liant C voit sa résistance à la compression augmenter au moins jusqu'à 400 jours et que, de même, les résistances à la compression des liants de formulation A et B augmentent également au moins jusqu'après 100 jours.

Or, on sait que, dans ce domaine, plus les prises sont lentes meilleures sont les résistances à terme et la pérennité de l'ouvrage.

Par ailleurs on a également constaté, tant sur des éprouvettes que sur le terrain, que de légers fendillements qui apparaissaient, par exemple sous l'effet d'une contrainte, disparaissaient d'eux-mêmes par la suite au cours du temps. Une telle possibilité est particulièrement intéressante, dans le cas d'un traitement du sol, dès lors que l'on sait que le soubassement sur lequel est disposé le revêtement est en mesure d'évoluer, notamment pendant les premiers mois de la mise en place. Une telle évolution a pour conséquence de produire des fendillements qui, dans les revêtements de sols traités suivant l'état antérieur de la technique, restaient présents sur celui-ci de façon définitive. Le caractère « autocicatrisant » des sols traités suivant le procédé de l'invention permet de conserver à ces derniers un aspect esthétique permanent.

De plus, la prise lente offre un délai de maniabilité important du mélange de granulat avec le liant qui permet, contrairement au mélange à base de ciment Portland classique, de prendre le temps nécessaire à une mise en oeuvre soignée.

On notera également que la prise est par ailleurs suffisamment rapide pour, dans certains cas, autoriser la circulation de véhicules dès le lendemain même de la mise en oeuvre.

En complément des différents essais décrits précédemment qui ont été réalisés en laboratoire, on a effectué des essais en vraie grandeur sur une plate-forme de tests extérieure. Le site d'essais était composé de différentes parcelles d'une superficie unitaire d'environ 10 m² qui correspondaient chacune à un mélange donné d'un sable spécifique avec un liant.

Il a ainsi été possible de tester différentes formulations de liants et en particulier les liants référencés A et B précédemment mentionnés dans les essais de laboratoire. Ces liants ont été mélangés à des sables de différentes natures minéralogiques comprenant le sable calcaire et le sable silico-calcaire testé dans les précédents exemples. Dans ces différents essais la teneur en liant des mélanges était de 7%. Chaque mélange sable + liant a été malaxé et humidifié à la teneur en eau optimale déterminée par les essais Proctor. Chaque mélange une fois homogénéisé a été mis en place sur une parcelle spécifique de la plate-forme extérieure. Après un temps de cure d'environ 1 à 2 heures le sable à été cylindré en deux ou trois passages et l'épaisseur de la couche traitée a été d'environ 10 cm après compactage.

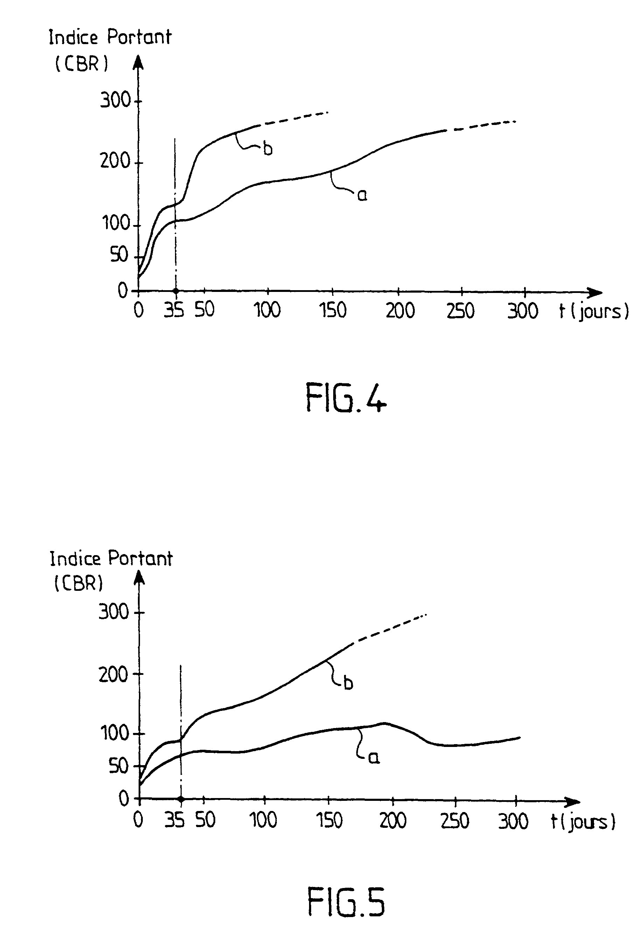

On a ensuite mesuré au cours du temps l'évolution de la portance en mesurant la résistance au poinçonnement du sol sous l'impact d'une dame de 4,5 kg (compactomètre Clegg). On a représenté sur les figures 4 et 5 l'évolution de l'Indice Portant (CBR) au cours du temps sur une période de l'ordre de 300 jours, pour le sol silico-calcaire (figure 4) et le sol calcaire (figure 5) pour le liant A courbe a et le liant B courbe b.

On remarquera que bien que le traitement ait été réalisé en période pluvieuse et froide (fin octobre) les Indices Portants (CBR) dépassent en moins de 15 jours des valeurs de 50, ce qui correspond à un indice compatible avec une circulation de véhicules légers. On constate par ailleurs que la valeur de la portance continue ensuite à évoluer progressivement au cours du temps, l'évolution étant plus rapide pour le liant de type B.

Ce caractère de réactivité du sol traité dans le procédé suivant l'invention est particulièrement intéressant dans la mesure où il garantit une stabilisation durable. En effet on constate que, dans ces conditions, si un désordre apparaît dans le revêtement le liant possède alors une capacité suffisante pour que le désordre cicatrise et disparaisse.

On notera d'ailleurs à ce sujet qu'un tel désordre peut se voir sur les courbes des figures 4 et 5. En effet, au 35^{ème} jour, les conditions climatiques extérieures se sont dégradées et les revêtements ont été soumis à un gel suivi d'un dégel conduisant à une déstructuration de surface du revêtement. On constate que cette déstructuration s'est traduite par une stagnation voire une légère décroissance des indices portants, mais que, au cours d'une période suivante on a assisté à une réactivation du liant qui a permis de compenser et corriger le désordre qui est survenu.

Le procédé suivant l'invention est intéressant dans la mesure où le traitement du sol n'aboutit pas à un état mort ou figé mais au contraire à un état susceptible d'évoluer dans le temps et permettant au sol traité de compenser différents désordres qui interviennent dans sa structure.

## Revendications

1. Procédé de stabilisation d'un sol, dans lequel on mélange avec celui-ci un liant apte à faire prise en présence d'eau, **caractérisé en ce que** :
- on utilise un liant comprenant du verre silicaté industriel, c'est-à-dire un verre dont la somme des teneurs en Na₂O et en K₂O est supérieure à 10%, qui est exempt de clinker et de laitier, et qui se trouve à l'état finement broyé,
- on complète ce liant en ajoutant au verre au moins un réactif basique apte à porter l'eau du mélange, après gâchage de celui-ci, à un pH au moins égal à 12, le rapport massique verre/réactif basique étant supérieur à 3.

2. Procédé suivant la revendication 1 **caractérisé en ce que** on utilise un verre creux sodocalcique qui possède une teneur en Na₂O supérieure à 10%.

3. Procédé suivant l'une des revendications précédentes **caractérisé en ce que** la proportion de verre dans le liant est au moins égale à 60%.

4. Procédé suivant l'une des revendications précédentes **caractérisé en ce que** le réactif basique comprend au moins une base forte telle que notamment de la soude et/ou de la potasse en quantité de l'ordre de 0,5% à 5% en poids total de liant.

5. Procédé suivant l'une des revendications précédentes **caractérisée en ce que** le réactif basique comprend de la chaux sous la forme exclusive de chaux vive.

6. Procédé suivant la revendication 5 **caractérisé en ce qu'**on utilise une quantité de chaux de l'ordre de 5% à 30% en poids total de liant.

7. Procédé suivant l'une des revendication 4 à 6 **caractérisé en ce que** l'on utilise un réactif basique constitué de chaux et de soude, le rapport des quantités utilisées Poids de chaux / Poids de soude étant sensiblement compris entre 3 et 20.

8. Procédé suivant l'une des revendications précédentes **caractérisé en ce que** le verre utilisé est tel qu'au moins 90% des particules de celui-ci ont leur plus grande dimension inférieure à 100 µm.

9. Procédé suivant l'une des revendications précédentes **caractérisé en ce que** l'on mélange au sol à traiter une quantité de liant comprise entre 3% et 15% en poids de celui-ci.

10. Composition de renforcement d'un sol obtenue par l'ajout d'un liant en mesure de faire prise par adjonction d'eau, **caractérisé en ce que** le liant est constitué de verre silicaté industriel, c'est-à-dire un verre dont la somme des teneurs en Na₂O et en K₂O est supérieure à 10%, et qui est exempt de clinker et de laitier et qui se trouve à l'état finement broyé, auquel on ajoute au moins un réactif basique apte à porter l'eau du mélange, après gâchage de celui-ci, à un pH au moins égal à 12, le rapport massique verre/réactif basique état supérieur à 3.

11. Utilisation d'une composition selon la revendication 10 pour le renforcement d'un sol.

## Patentansprüche

1. Verfahren zur Stabilisierung eines Bodens, bei welchem diesem ein Bindemittel zugemischt wird, das geeignet ist, in Anwesenheit von Wasser abzubinden, **dadurch gekennzeichnet, dass**:
- ein Bindemittel verwendet wird, das industrielles Silikatglas enthält, d.h. ein Glas, bei dem die Summe der Gehalte an Na₂O und K₂O mehr als 10% beträgt, das frei von Klinker und Schlacke ist, und das sich in fein gemahlenem Zustand befindet,
- dieses Bindemittel fertiggestellt wird, indem dem Glas mindestens ein basisches Reagens zugesetzt wird, das geeignet ist, das Wasser des Gemisches nach dessen Anrühren auf einen pH-Wert von mindestens 12 zu bringen, wobei das Massenverhältnis von Glas/basisches Bindemittel mehr als 3 beträgt.

2. Verfahren nach Anspruch 1, **dadurch gekennzeichnet, dass** ein Alkali-Kalk-Hohlglas verwendet wird, das einen Gehalt an Na₂O von mehr als 10% hat.

3. Verfahren nach einem der vorhergehenden Ansprüche, **dadurch gekennzeichnet, dass** der Glasanteil im Bindemittel bei mindestens 60% liegt.

4. Verfahren nach einem der vorhergehenden Ansprüche, **dadurch gekennzeichnet, dass** das basische Bindemittel mindestens eine starke Base wie beispielsweise insbesondere Soda und/oder Pottasche in einer Größenordnung von 0,5% bis 5 % des Gesamtgewichtes des Bindemittels enthält.

5. Verfahren nach einem der vorhergehenden Ansprüche, **dadurch gekennzeichnet, dass** das basische Reagens Kalk ausschließlich in Form von ungelöschtem Kalk enthält.

6. Verfahren nach Anspruch 5, **dadurch gekennzeichnet, dass** eine Menge an Kalk in der Größenordnung von 5 % bis 30 % des Gesamtgewichtes des Bindemittels verwendet wird.

7. Verfahren nach einem der Ansprüche 4 bis 6, **dadurch gekennzeichnet, dass** ein basisches Reagens verwendet wird, das aus Kalk und Soda besteht, wobei das Verhältnis der verwendeten Mengen, angegeben als Kalkgewicht/Sodagewicht, im Wesentlichen zwischen 3 und 20 liegt.

8. Verfahren nach einem der vorhergehenden Ansprüche, **dadurch gekennzeichnet, dass** das verwendete Glas derart beschaffen ist, dass bei mindestens 90 % von dessen Partikeln die größte Abmessung weniger als 100 µm beträgt.

9. Verfahren nach einem der vorhergehenden Ansprüche, **dadurch gekennzeichnet, dass** dem zu behandelnden Boden eine Menge an Bindemittel zwischen 3 % und 15 % von dessen Gewicht zugemischt wird.

10. Zusammensetzung zur Bodenstabilisierung, die durch das Zusetzen eines Bindemittels erzielt wird, welches die Fähigkeit hat, durch Zusetzen von Wasser abzubinden, **dadurch gekennzeichnet, dass** das Bindemittel aus industriellem Silikatglas besteht, d.h. einem Glas, bei dem die Summe der Gehalte an Na₂O und K₂O mehr als 10% beträgt, das frei von Klinker und Schlacke ist und das in fein gemahlenem Zustand ist, und dem mindestens ein basisches Reagens zugesetzt wird, das geeignet ist, das Wasser des Gemisches nach dessen Anrühren auf einen pH-Wert von mindestens 12 zu bringen, wobei das Massenverhältnis von Glas/basisches Bindemittel mehr als 3 beträgt.

11. Verwendung einer Zusammensetzung nach Anspruch 10 zur Bodenstabilisierung.

## Claims

1. Method for stabilising ground surface, in which there is mixed with the latter a binder adapted to set in the presence of water, **characterized in that**:
- a binder is used, comprising industrial silicated glass, i.e. a glass of which the sum of the Na₂O and K₂O contents is greater than 10%, which is bereft of clinker and of slag, and which is found in the finely ground state,
- this binder is completed by adding to the glass at least one basic reagent adapted to take the water of the mixture, after the latter is mixed, to a pH at least equal to 12, the ratio by mass of glass/basic reagent being greater than 3.

2. Method according to Claim 1, **characterized in that** a sodio-calcium hollow glass is used, which presents an Na₂O content greater than 10%.

3. Method according to one of the preceding Claims, **characterized in that** the proportion of glass in the binder is at least equal to 60%.

4. Method according to one of the preceding Claims, **characterized in that** the basic reagent comprises at least one strong base such as in particular soda and/or potash in a quantity of the order of 0.5% to 5% by total weight of binder.

5. Method according to one of the preceding Claims, **characterized in that** the basic reagent comprises lime in the exclusive form of quicklime.

6. Method according to Claim 5, **characterized in that** a quantity of lime of the order of 5% to 30% by total weight of binder, is used.

7. Method according to one of Claims 4 to 6, **characterized in that** a basic reagent constituted by lime and soda is used, the ratio of the quantities used Weight of lime / Weight of soda being substantially included between 3 and 20.

8. Method according to one of the preceding Claims, **characterized in that** the glass used is such that the largest dimension of at least 90% of the particles thereof is less than 100 µm.

9. Method according to one of the preceding Claims, **characterized in that** there is mixed with the ground surface to be treated a quantity of binder included between 3% and 15% by weight thereof.

10. Composition for reinforcing ground surface obtained by the addition of a binding able to set by addition of water, **characterized in that** the binding is constituted by industrial silicated glass, i.e. a glass of which the sum of the Na₂O and K₂O contents is greater than 10%, and which is bereft of clinker and of slag, and which is found in the finely ground state, to which is added at least one basic reagent adapted to take the water of the mixture, after the latter is mixed, to a pH at least equal to 12, the ratio by mass of glass/basic reagent being greater than 3.

11. Use of a composition according to Claim 10 for reinforcing ground surface.
